# EUROPEAN PATENT SPECIFICATION

(11) **EP 3 779 519 B1**
(45) Date of publication and mention of the grant of the patent: **29.04.2026**
(21) Application number: 19780891.8
(22) Date of filing: 27.03.2019
(51) Int. Cl.: G01V 5/00

(54) **CONTAINER INSPECTION SYSTEM, PORT FACILITY, AND CONTAINER INSPECTION METHOD**
BEHÄLTERINSPEKTIONSSYSTEM, AUSGANGSEINRICHTUNG UND BEHÄLTERINSPEKTIONSVERFAHREN
SYSTÈME D'INSPECTION DE CONTENEUR, INSTALLATION DE PORT, ET PROCÉDÉ D'INSPECTION DE CONTENEUR

(30) Priority: 04.04.2018 CN 201810298669
(43) Date of publication of application: 17.02.2021
(73) Proprietor: Tsinghua University, Haidian District Beijing 100084 (CN); Nuctech Company Limited, TongFang Building Shuangqinglu Haidian District Beijing 100084 (CN)
(72) Inventor: SONG, Quanwei, Beijing 100084 (CN); ZONG, Chunguang, Beijing 100084 (CN); SHI, Junping, Beijing 100084 (CN); MENG, Hui, Beijing 100084 (CN); GUO, Yiwei, Beijing 100084 (CN); LI, Jianmin, Beijing 100084 (CN); SUN, Shangmin, Beijing 100084 (CN); LI, Yulan, Beijing 100084 (CN); GU, Jingyu, Beijing 100084 (CN); LI, Yuanjing, Beijing 100084 (CN); CHEN, Zhiqiang, Beijing 100084 (CN)
(74) Representative: Meissner Bolte Partnerschaft mbB
(86) International application number: PCT/CN2019/079857
(87) International publication number: WO 2019/192368

(56) References cited:
- CN-A- 106 226 336
- CN-A- 106 932 830
- CN-A- 107 867 651
- CN-A- 108 318 930
- CN-A- 108 373 108
- CN-A- 108 490 495
- CN-A- 108 508 496
- CN-A- 108 873 088
- EA-B1- 022 587
- JP-A- 2002 046 817
- KR-A- 20090 108 664
- KR-B1- 100 622 195
- US-B2- 7 677 857
- US-B2- 7 753 637

## Description

### Cross Reference to Related Applications

The present application is based on and claims priority to Chinese patent application No. 201810298669.1, filed on April 4, 2018.

### Field

The present disclosure relates to the field of scanning inspection technology, in particular to a container scanning system, a port facility, and a container scanning method.

### Background

With the development of the vessel industry, the workload of container loading and unloading operations is increasing. As large equipment for loading and unloading containers, quay cranes are increasingly used in various ports to achieve automated loading and unloading.

To prevent prohibited cargo from entering the territory through ports and ensure the safety of cargo in circulation, scanning inspection is usually performed on containers after cargo is unloaded. At present, generally after a container is unloaded by using a quay crane, the container is transported by a ground vehicle to a designated location to perform scanning inspection on the container. This requires a special area for scanning inspection at the port. Not only is a large area occupied, but also long time is consumed, and the circulation efficiency of the container at the port is low.

It should be noted that the information disclosed in the background section of the present disclosure is only intended to enhance understanding of the general background of the present disclosure, and should not be considered as an admission or any form of implication that the information constitutes related technology well known to those skilled in the art. Scanning systems incorporated into container handling equipment are known from US 7 753 637 and US7677857 for example.

### Summary

Embodiments of the present disclosure propose a container scanning system, a port facility, and a container scanning method, to solve as much as possible the problems that an inspection system occupies a large floor area and the container circulation efficiency is low in the related art.

According to an aspect of the present disclosure, a container scanning system is provided, as set forth in claim 1.

According to another aspect of the present disclosure, a container scanning method is further provided, as set forth in claim 6.

Based on the technical solutions described above, in the embodiments of the present disclosure, by arranging the scanning device on the scanning platform of the quay crane, a floor area occupied by the scanning device can be saved, and there is no need to reserve a special inspection location for the scanning device in an area outside the quay crane, so that the overall layout of the port is more reasonable; and arranging the scanning device on the scanning platform of the quay crane can also achieve the scanning inspection during the process of unloading the container from a vessel or during the process of loading the container from the ground to a vessel, to avoid in-yard inspection, thereby greatly reducing container loading, unloading and scanning inspection time, shortening the total circulation time of the container at the port, and improving the circulation efficiency.

### Brief Description of the Drawings

The drawings described herein are used to provide a further understanding of the present disclosure and form a part of the present application. The illustrative embodiments of the present disclosure and description thereof are used for explaining rather than unduly limiting the present disclosure. In the drawings:
Fig. 1 is a front view of an embodiment of a container scanning system in the present disclosure.
Fig. 2 is a top view of an embodiment of a container scanning system in the present disclosure.
Fig. 3 is a left view of an embodiments of a container scanning system in the present disclosure.
Fig. 4 is an enlarged view of a part denoted by sign I in Fig. 1.
Fig. 5 is an enlarged view of a part denoted by sign II in Fig. 2.
Fig. 6 is an enlarged view of a part denoted by sign III in Fig. 3.

Reference numerals:
100. quay crane; 200. scanning device; 300. container;
101. first hoisting component; 102. second hoisting component; 103. scanning platform; 104. guide cylinder; 105. transfer device; 106. scanning station; 107. temporary storage station;
201. ray source; 202. cabin; 203. horizontal arm; 204. vertical arm; 205. support base.

### Detailed Description of the Embodiments

The technical solutions in the embodiments will be described clearly and completely below in conjunction with the accompanying drawings in the embodiments of the present disclosure. Obviously, the described embodiments are only a part of the embodiments of the present disclosure, and not all the embodiments. Based on the embodiments of the present disclosure, all other embodiments obtained by those of ordinary skill in the art without creative work shall fall within the protection scope of the present disclosure.

In description of the present disclosure, it should be understood that orientation or position relations denoted by the terms "center", "transverse", "longitudinal", "front", "rear", "left", "right", "upper", "lower", "vertical", "horizontal", "top", "bottom", "inner", "outer" and the like are orientation or position relations illustrated based on the drawings, are merely for the convenience of describing the present disclosure and simplifying description, instead of indicating or implying the denoted devices or elements must have specific orientations or be constructed and operated in specific orientations, and thus the terms cannot be understood as limiting the protection scope of the present disclosure.

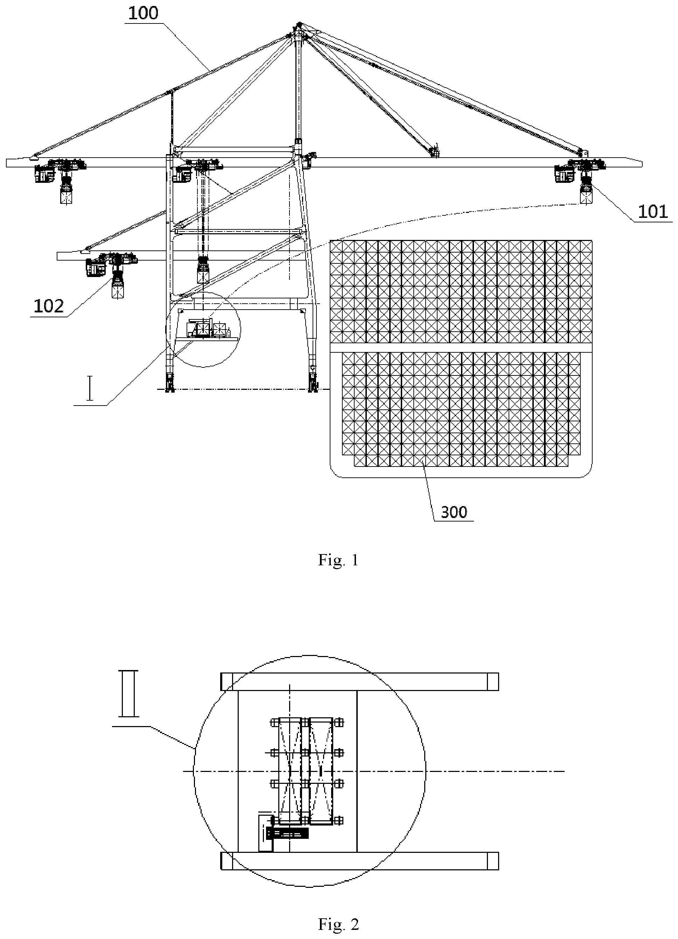

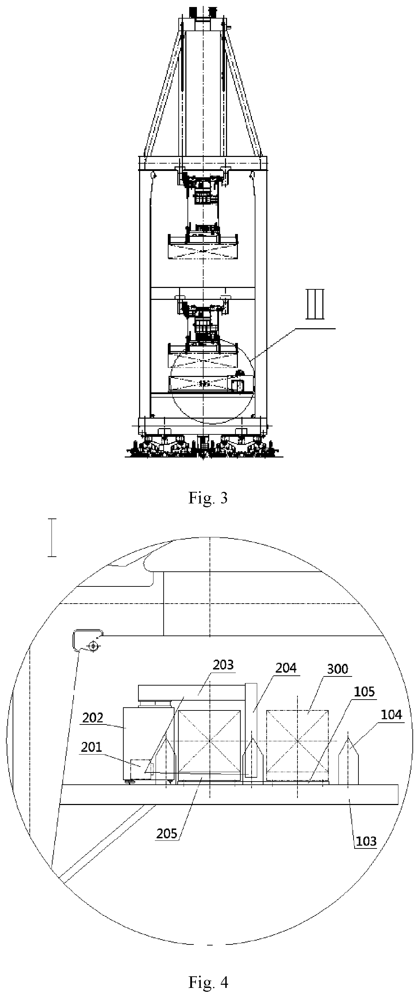

Referring to Figs. 1 and 4, in an illustrative embodiment of a container scanning system provided in the present disclosure, the container scanning system includes a quay crane 100 and a scanning device 200, wherein the quay crane 100 is provided with a scanning platform 103, and a first hoisting component 101 of the quay crane 100 is configured to hoist and transport a container 300 and placing the container 300 to the scanning platform 103; and the scanning device 200 is disposed on the scanning platform 103, and the scanning device 200 moves relative to the container 300 on the scanning platform 103 to perform scanning inspection on the container 300.

In the above-mentioned illustrative embodiment, by arranging the scanning device 200 on the scanning platform 103 of the quay crane 100, a floor area occupied by the scanning device 200 can be saved, and there is no need to reserve a special inspection location for the scanning device 200 in an area outside the quay crane 100, so that the overall layout of the port is more reasonable; and arranging the scanning device 200 on the scanning platform 103 of the quay crane 100 can also achieve the scanning inspection during the process of unloading the container from a vessel or during the process of loading the container from the ground to a vessel, thereby greatly reducing container loading, unloading and scanning inspection time, shortening the total circulation time of the container at the port, and improving the circulation efficiency.

In the above-mentioned illustrative embodiment, the container 300 keeps stationary, and the scanning inspection is achieved by the movement of the scanning device 200 relative to the container 300.

Specifically, the scanning device 200 includes a ray source and a detector. Rays emitted by the ray source form a sector scanning plane, which intersects the container 300. The entire container 300 can be scanned by the movement of the scanning device 200.

Optionally, the scanning plane is perpendicular to a length direction of the container 300.

Optionally, the scanning device 200 moves relative to the container 300 in the length direction of the container 300. During the scanning inspection, both the ray source and the detector of the scanning device 200 move relative to the container 300 in the length direction of the container 300.

Optionally, the container scanning system further includes a drive mechanism, which is configured to drive the scanning device 200 to move relative to the container 300.

Specifically, the drive mechanism may be an AGV trolley, a rail car, a roller transmission mechanism, or the like.

Further, the scanning platform 103 is provided with a scanning station 106, the scanning station 106 is configured to receive the container 300 hoisted and transported by the first hoisting component 101, and the scanning device 200 performs scanning inspection on the container 300 on the scanning station 106. By providing the scanning station 106, the placement position of the container 300 on the scanning platform 103 can be guided, which facilitates the scanning inspection on the container 300, and improves the efficiency of the scanning inspection.

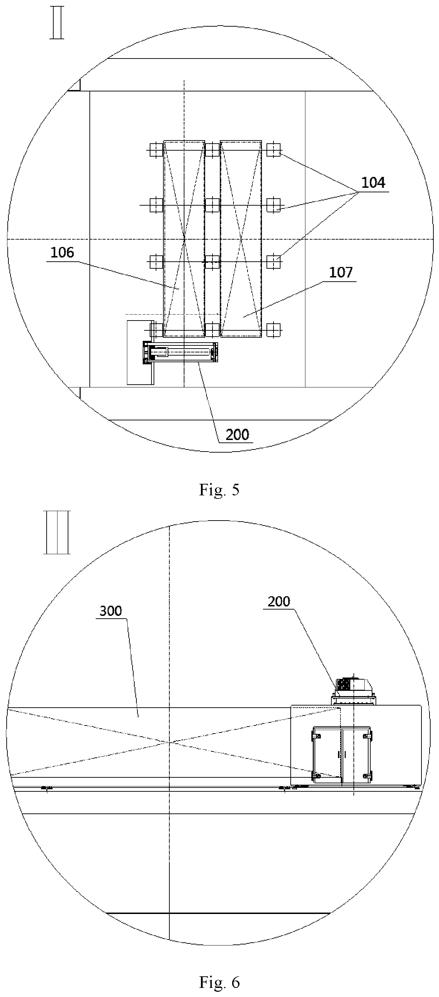

As shown in Figs. 2 and 5, the scanning platform 103 is further provided with a temporary storage station 107, the temporary storage station 107 is configured to temporarily store the container 300 on which scanning inspection is completed.

By providing the temporary storage station 107, the container 300 on which scanning inspection is completed on the scanning station 106 may be moved to the temporary storage station 107 for temporary storage. Even if a component for hoisting and carrying away the container 300 is not in place, the scanning station 106 may continue to receive the next container 300 and perform scanning inspection work on the next container 300, to achieve the continuity of the scanning inspection work and effectively improve the efficiency of the scanning inspection.

Optionally, the container scanning system includes a plurality of scanning stations 106 and a plurality of temporary storage stations 107, such that the scanning inspection efficiency may be further improved.

As to the arrangement form of the scanning station 106 and the temporary storage station 107, there may be many options. Two optional implementations are given below.

In an optional embodiment, the temporary storage station 107 is arranged on a side of a long edge of the scanning station 106, and a long edge of the temporary storage station 107 and the long edge of the scanning station 106 are parallel to each other. In this arrangement, further optionally, a line connecting the center of the temporary storage station 107 and the center of the scanning station 106, and a short edge of the temporary storage station 107 or the scanning station 106 are parallel to each other.

In another optional embodiment, the temporary storage station 107 is arranged on a side of a short edge of the scanning station 106, and a short edge of the temporary storage station 107 and the short edge of the scanning station 106 are parallel to each other. In this arrangement, further optionally, a line connecting the center of the temporary storage station 107 and the center of the scanning station 106, and a long edge of the temporary storage station 107 or the scanning station 106 are parallel to each other.

The area ranges of the scanning station 106 and the temporary storage station 107 are roughly similar to the shape of the container 300. Generally speaking, the container 300 is in the shape of a cuboid. The long edge of the scanning station 106 and the long edge of the temporary storage station 107 described above are parallel to the length direction of the container 300 (as a first direction), and the short edge of the scanning station 106 and the short edge of the temporary storage station 107 described above are parallel to a width direction of the container 300 (as a second direction).

After the container 300 on which scanning inspection is completed on the scanning station 106 is moved to the temporary storage station 107, further, the transportation of the container 300 from the temporary storage station 107 to a designated target location may be carried out in various ways. Two optional implementations are given below.

In a first optional embodiment, the first hoisting component 101 is further configured to hoist the container 300 on which scanning inspection is completed on the scanning platform 103 and transport the container 300 to a container moving equipment, so as to transport the container 300 to the target location by the container moving equipment.

In a second optional embodiment, the quay crane 100 includes a second hoisting component 102, and the second hoisting component 102 is configured to hoist the container 300 on which scanning inspection is completed on the scanning platform 103 and transport the container 300 to a container moving equipment, so as to transport the container 300 to the target location by the container moving equipment.

In the first optional embodiment, the container 300 on which scanning inspection is completed is hoisted and carried away by the first hoisting component 101; and in the second optional embodiment, the container 300 on which scanning inspection is completed is hoisted and carried away by the second hoisting component 102. The two embodiments both involve two situations. In one situation, the container 300 on which scanning inspection is completed is directly hoisted and carried away from the scanning station 106 by the first hoisting component 101 or the second hoisting component 102. In the other situation, after the container 300 on which scanning inspection is completed is transported from the scanning station 106 to the temporary storage station 107, the container 300 is hoisted and carried away from the temporary storage station 107 by the first hoisting component 101 or the second hoisting component 102.

In the above-mentioned two optional embodiments, preferably, the quay crane 100 includes a second hoisting component 102, and the second hoisting component 102 is configured to hoist the container 300 on the temporary storage station 107 and transport the container 300 to a container moving equipment, so as to transport the container 300 to the target location by the container moving equipment. The preferred embodiment has the advantage that the operation of hoisting and carrying away the container 300 from the temporary storage station 107 and the operation of hoisting and transporting another container 300 to the scanning station 106 and carrying out scanning inspection thereon may be relatively independent without influencing each other, and even if the container 300 on the temporary storage station 107 is not hoisted and carried away timely, the operation of hoisting and transporting another container 300 to the scanning station 106 and carrying out scanning inspection thereon is not affected; in this way, the operation of hoisting and carrying away the container 300 from the temporary storage station 107 and the operation of hoisting and transporting another container 300 to the scanning station 106 and carrying out scanning inspection thereon may be performed at the same time, thereby greatly improving the scanning inspection efficiency.

As to the above-mentioned target location, in the case where the container is unloaded from a vessel, the target location may be a warehouse for storing containers on the ground of the port, or may also be a truck for transporting containers, etc.; and in the case where the container is loaded to a vessel, the target location may be a storage bin for storing containers on the vessel.

In the case where the container is unloaded from a vessel, the above-mentioned container moving equipment may be an AGV trolley, a container transport truck or the like. In the case where the container is loaded to a vessel, the above-mentioned container moving equipment may be equipment, disposed on the ship, for placing containers to corresponding storage bins.

The container scanning system further includes a transfer device 105, the transfer device 105 is disposed on the scanning platform 103 and configured to transfer the container 300 on the scanning station 106 to the temporary storage station 107. Providing the transfer device 105 can further improve the work efficiency.

The transfer device 105 transfers the container 300 from the scanning station 106 to the temporary storage station 107 and returns to an original location after the container 300 is hoisted and carried away, to prepare for the next transfer.

There may be multiple options for the specific structure of the transfer device 105. For example, it may be a transfer trolley used in combination with a rail to facilitate the movement of the container 300 between different stations; or it may also be a roller transmission mechanism, etc.

As shown in Figs. 4 and 5, the scanning platform 103 is provided with a guide structure, which is configured to guide the container 300 to fall. By providing the guide structure, the container 300 may fall to the scanning platform 103 more accurately; it may also limit the container 300 and prevent the container 300 from deviating from the scanning station 106 or the temporary storage station 107, so as to ensure the container 300 can be accurately hoisted every time after the first hoisting component 101 or the second hoisting component 102 falls, thereby reducing the alignment time and improving the circulation efficiency.

The guide structure includes a plurality of guide cylinders 104, the guide cylinders 104 being arranged along edges of the scanning station 106 on the scanning platform 103, such that the container 300 may be guided and positioned by the guide cylinders 104. The tops of the guide cylinders 104 are cone-shaped, so that the container 300 may be better guided to fall quickly and accurately.

The temporary storage station 107 on the scanning platform 103 may also be provided with guide cylinders 104 to limit the container 300.

The guide structure is movable in a vertical direction. After the container 300 arrives at the scanning station 106, the guide structure descends to below a plane where the scanning station 106 is located, so that the scanning device can smoothly pass two sides of the container 300, and also interference with the scanning inspection is avoided; after the inspection is completed, the guide structure ascends to above the plane where the scanning station 106 is located, to guide the next container 300 to fall.

In the above-mentioned various embodiments, optionally, the distance between the scanning platform 103 and the ground is not smaller than a maximum height of a vehicle traveling on the ground, to ensure the safety of vehicle traffic.

In addition, as to set heights of the first hoisting component 101 and the second hoisting component 102, to avoid interference with movement routes of the first hoisting component 101 and the second hoisting component 102, optionally, the first hoisting component 101 and the second hoisting component 102 are set to different heights, that is, the distance between the movement route of the first hoisting component 101 and the ground may be greater or smaller than the distance between the movement route of the second hoisting component 102 and the ground.

In the above-mentioned various embodiments, the specific structure of the scanning device is not limited excessively herein, so long as scanning inspection on the container 300 can be achieved.

Optionally, as shown in Fig. 4, the scanning device 200 includes a ray source 201, a cabin 202, a horizontal arm 203, a vertical arm 204, and a support base 205, wherein the cabin 202 is installed on the scanning platform 103; the ray source 201 is installed on the cabin 202; the horizontal arm 203 is arranged horizontally, and the vertical arm 204 is arranged vertically; the horizontal arm 203 and the vertical arm 204 are provided with a plurality of detectors; the container 300 is installed on the support base 205; and the support base 205 is disposed on the transfer device 105. Providing the transfer device 105 can achieve the movement of the container 300 between the scanning station 106 and the temporary storage station 107. The ray source 201 emits rays, which are received by the detectors after passing through the container 300 to achieve scanning inspection on the container 300.

Based on the above-mentioned container scanning system, the present disclosure further proposes a port facility, which includes the above-mentioned container scanning system.

The present disclosure further proposes a container scanning method, including:
hoisting and transporting, by a first hoisting component 101 of a quay crane 100, a container 300 to a scanning platform 103 disposed on the quay crane 100; and
driving a scanning device 200 disposed on the scanning platform 103 to move relative to the container 300 so as to perform scanning inspection on the container 300.

Optionally, the container scanning method further includes:
after the scanning inspection is completed, hoisting and transporting, by the first hoisting component 101 or a second hoisting component 102 of the quay crane 100, the container 300 on the scanning platform 103 to a container moving equipment, and transporting, by the container moving equipment, the container 300 to a target location.

Optionally, the container scanning method further includes:
after the scanning inspection is completed, transferring the container 300 to a temporary storage station 107 disposed on the scanning platform 103.

Optionally, the container scanning method further includes:
hoisting and transporting, by a second hoisting component 102 of the quay crane 100, the container 300 on a temporary storage station 107 to a container moving equipment, and transporting, by the container moving equipment, the container 300 to a target location.

The positive technical effects of the container scanning system in the various embodiments described above are also applicable to the port facility and the container scanning method and are not repeated here.

A working process of an embodiment of the container scanning system, the port facility, and the container scanning method of the present disclosure will be described below in conjunction with Figs. 1-6:

As shown in Figs. 1 and 4, the first hoisting component 101 on the quay crane 100 takes the container 300 from a cargo ship, and during transferring to an AGV trolley (or container transport truck), first, the first hoisting component 101 transfers the container 300 to the scanning station 106 on the scanning platform 103; after the container 300 is on the scanning station 106 and is stable, the guide cylinders 104 on the scanning station 106 descend to below a plane where the scanning station 106 is located; and the detection device 200 feeds back a signal after detecting the container 300, and the container 300 keeps stationary, and the scanning device 200 moves relative to the container 300 to perform scanning inspection. After scanning is completed, the transfer device 105 transfers the container 300 on the scanning station 106 to the temporary storage station 107, and the second hoisting component 102 on the quay crane 100 hoists the container 300 on the temporary storage station 107 and transports the container 300 to the AGV trolley (or container transport truck), and the scanning process of the container 300 ends. While the second hoisting component 102 hoists the container 300, the first hoisting component 101 may hoist and transport the next container 300 to be scanned to the scanning station 106 to achieve continuous scanning. The scanning device 200 may return to an original location first, and after the next container 300 is in place, move relative to the container 300 to perform scanning inspection like the previous scanning inspection; or it may also remain stationary in situ after finishing a scanning operation, and after the next container 300 is in place, the scanning device 200 performs the next scanning inspection during a returning process.

From the description of multiple embodiments of the container scanning system, the port facility, and the container scanning method of the present disclosure, it can be seen the embodiments of the container scanning system, the port facility, and the container scanning method of the present disclosure have at least one or more of the following advantages:
1. the scanning device is disposed on the quay crane, and performs scanning inspection during loading or unloading of the container, so that in-yard inspection may be avoided, thereby simplifying the process, reducing the loading, unloading and scanning time, shortening the total circulation time of the container at the port, and improving the circulation efficiency;
2. by arranging the scanning device on the quay crane, a floor area may also be saved, and there is no need to reserve a special inspection location in an area outside the quay crane, so that the overall layout of the port is more reasonable;
3. the scanning platform is provided with the scanning station and the temporary storage station, which can temporarily store the container on which scanning inspection is completed, so that the scanning device can continue to perform inspection on the next container on the scanning station; and
4. the quay crane is provided with two hoisting components, which cooperate with the scanning station and the temporary storage station, so that continuous scanning inspection can be achieved, and the scanning inspection efficiency is improved.

## Claims

1. A container scanning system, comprising:
a quay crane (100), comprising:
a scanning platform (103); and
a first hoisting component (101), for hoisting a container (300) and transporting the container (300) to the scanning platform (103); and
a scanning device (200), movably disposed on the scanning platform (103) and configured to move relative to the container (300) to perform scanning inspection on the container (300);
wherein the scanning platform (103) is provided with a scanning station (106), the scanning station (106) configured to receive the container (300) hoisted and transported by the first hoisting component (101), and the scanning device (200) configured to perform scanning inspection on the container (300) on the scanning station (106);
the scanning platform (103) is further provided with a temporary storage station (107), the temporary storage station (107) configured to temporarily store the container (300) on which scanning inspection is completed;
wherein the container scanning system further comprises a transfer device (105), the transfer device (105) being disposed on the scanning platform (103) and configured to transfer the container (300) on the scanning station (106) to the temporary storage station (107);
the scanning platform (103) is provided with a guide structure, which is configured to guide the container (300) to descend to the scanning platform (103);
**characterized in that** the guide structure comprises a plurality of guide cylinders (104), the guide cylinders (104) being arranged along edges of the scanning station (106) on the scanning platform (103), and the tops of the guide cylinders (104) being cone-shaped;
the guide structure is movable in a vertical direction relative to the scanning platform (103).

2. The container scanning system according to claim 1, wherein the temporary storage station (107) is disposed on a side of the scanning station (106) along a first direction which is a length direction of the container (300); or the temporary storage station (107) is disposed on a side of the scanning station (106) along a second direction which is a width direction of the container (300).

3. The container scanning system according to claim 1, wherein the first hoisting component (101) is configured to hoist the container (300) on which scanning inspection is completed on the scanning platform (103) and transport the container (300) to a container moving equipment; or
the quay crane (100) comprises a second hoisting component (102), and the second hoisting component (102) configured to hoist the container (300) on which scanning inspection is completed on the scanning platform (103) and transport the container (300) to a container moving equipment.

4. The container scanning system according to claim 1, wherein the scanning device (200) is configured to move relative to the container (300) in a length direction of the container (300).

5. A port facility, comprising the container scanning system of any one of claims 1-4.

6. A container scanning method, comprising:
hoisting and transporting a container (300) to a scanning platform (103) disposed on a quay crane (100) by a first hoisting component (101) of the quay crane (100); and
driving a scanning device (200) disposed on the scanning platform (103) to move relative to the container (300) so as to perform scanning inspection on the container (300);
the scanning platform (103) is provided with a scanning station (106) and a temporary storage station (107), and
hoisting and transporting a container (300) to a scanning platform (103) disposed on a quay crane (100) by a first hoisting component (101) of the quay crane (100) comprises: hoisting and transporting a container (300) to the scanning station (106) of the scanning platform (103) disposed on the quay crane (100) by the first hoisting component (101) of the quay crane (100);
driving a scanning device (200) disposed on the scanning platform (103) to move relative to the container (300) so as to perform scanning inspection on the container (300) comprises: driving a scanning device (200) disposed on the scanning platform (103) to move relative to the container (300) on the scanning station (106) to perform scanning inspection on the container (300) on the scanning station (106); and
the container scanning method further comprises:
after the scanning inspection is completed, transferring the container (300) from the scanning station (106) to the temporary storage station (107);
providing a guide structure in the scanning platform (103), which is configured to guide the container (300) to descend to the scanning platform (103);
**characterized in that** the guide structure comprises a plurality of guide cylinders (104), the guide cylinders (104) being arranged along edges of the scanning station (106) on the scanning platform (103), and the tops of the guide cylinders (104) being cone-shaped;
the guide structure is movable in a vertical direction relative to the scanning platform (103).

7. The method according to claim 6, further comprising:
after the scanning inspection is completed, hoisting and transporting the container (300) from the scanning platform (103) to a container moving equipment by the first hoisting component (101) or a second hoisting component (102) of the quay crane (100).

8. The container scanning method according to claim 6, further comprising:
hoisting and transporting the container (300) from the temporary storage station (107) to a container moving equipment by the first hoisting component (101) or a second hoisting component (102) of the quay crane (100).

## Patentansprüche

1. Behälterabtastsystem, umfassend:
einen Kaikran (100), umfassend:
eine Abtastplattform (103); und
eine erste Hebekomponente (101) zum Anheben eines Behälters (300) und Transportieren des Behälters (300) zu der Abtastplattform (103); und
eine Abtastvorrichtung (200), die beweglich auf der Abtastplattform (103) angeordnet ist und dazu ausgelegt ist, sich bezogen auf den Behälter (300) zu bewegen, um eine Abtastprüfung an dem Behälter (300) durchzuführen;
wobei die Abtastplattform (103) mit einer Abtaststation (106) versehen ist, wobei die Abtaststation (106) ausgelegt ist, um den Behälter (300), der von der ersten Hebekomponente (101) angehoben und transportiert wird, aufzunehmen, und die Abtastvorrichtung (200) ausgelegt ist, um die Abtastprüfung des Behälters (300) auf der Abtaststation (106) durchzuführen;
wobei die Abtastplattform (103) ferner mit einer Zwischenlagerungsstation (107) versehen ist, wobei die Zwischenlagerungsstation (107) ausgelegt ist, den Behälter (300), an dem die Abtastprüfung abgeschlossen ist, zwischenzulagern;
wobei das Behälterabtastsystem ferner eine Überführungsvorrichtung (105) umfasst, wobei die Überführungsvorrichtung (105) auf der Abtastplattform (103) angeordnet und ausgelegt ist, um den Behälter (300) auf der Abtaststation (106) zur Zwischenlagerungsstation (107) zu überführen;
wobei die Abtastplattform (103) mit einer Führungsstruktur versehen ist, die ausgelegt ist, um den Behälter (300) so zu führen, dass er auf die Abtastplattform (103) herabsinkt;
**dadurch gekennzeichnet, dass**
die Führungsstruktur eine Vielzahl von Führungszylindern (104) umfasst, wobei die Führungszylinder (104) entlang der Kanten der Abtaststation (106) auf der Abtastplattform (103) angeordnet sind und die Oberseiten der Führungszylinder (104) kegelförmig sind;
wobei die Führungsstruktur in vertikaler Richtung bezogen auf die Abtastplattform (103) beweglich ist.

2. Behälterabtastsystem nach Anspruch 1, wobei die Zwischenlagerungsstation (107) auf einer Seite der Abtaststation (106) entlang einer ersten Richtung angeordnet ist, die eine Längsrichtung des Behälters (300) ist, oder die Zwischenlagerungsstation (107) auf einer Seite der Abtaststation (106) entlang einer zweiten Richtung angeordnet ist, die eine Breitenrichtung des Behälters (300) ist.

3. Behälterabtastsystem nach Anspruch 1, wobei die erste Hebekomponente (101) ausgelegt ist, um den Behälter (300), an dem die Abtastprüfung abgeschlossen ist, auf die Abtastplattform (103) zu heben und den Behälter (300) zu einer Behältertransportgerät zu transportieren; oder
der Kaikran (100) eine zweite Hebekomponente (102) umfasst, wobei die zweite Hebekomponente (102) ausgelegt ist, um den Behälter (300), an dem die Abtastprüfung abgeschlossen ist, auf die Abtastplattform (103) zu heben und den Behälter (300) zu einer Behältertransportgerät zu transportieren.

4. Behälterabtastsystem nach Anspruch 1, wobei die Abtastvorrichtung (200) ausgelegt ist, um sich bezogen auf den Behälter (300) in einer Längsrichtung des Behälters (300) zu bewegen.

5. Hafeneinrichtung, umfassend das Behälterabtastsystem nach einem der Ansprüche 1 bis 4.

6. Behälterabtastverfahren, umfassend:
Heben und Transportieren eines Behälters (300) zu einer Abtastplattform (103), die auf einem Kaikran (100) angeordnet ist, durch eine erste Hebekomponente (101) des Kaikrans (100); und
Führen einer Abtastvorrichtung (200), die auf der Abtastplattform (103) angeordnet ist, um sich bezogen auf den Behälter (300) zu bewegen, um eine Abtastprüfung an dem Behälter (300) durchzuführen;
wobei die Abtastplattform (103) mit einer Abtaststation (106) und einer Zwischenlagerungsstation (107) versehen ist; und
wobei das Heben und Transportieren eines Behälters (300) zu einer Abtastplattform (103), die auf einem Kaikran (100) angeordnet ist, durch eine erste Hebekomponente (101) des Kaikrans (100) umfasst: Heben und Transportieren eines Behälters (300) zu der Abtaststation (106) auf der Abtastplattform (103), die auf dem Kaikran (100) angeordnet ist, durch die erste Hebekomponente (101) des Kaikrans (100);
wobei das Führen einer Abtastvorrichtung (200), die auf der Abtastplattform (103) angeordnet ist, um sich bezogen auf den Behälter (300) zu bewegen, um eine Abtastprüfung an dem Behälter (300) durchzuführen, umfasst: das Führen einer Abtastvorrichtung (200), die auf der Abtastplattform (103) angeordnet ist, um sich bezogen auf den Behälter (300) auf der Abtaststation (106) zu bewegen, um eine Abtastprüfung an dem Behälter (300) auf der Abtaststation (106) durchzuführen; und
wobei das Behälterabtastverfahren ferner umfasst:
nachdem die Abtastprüfung abgeschlossen ist, das Überführen des Behälters (300) von der Abtaststation (106) zu der Zwischenlagerungsstation (107);
Bereitstellen einer Führungsstruktur in der Abtastplattform (103), die ausgelegt ist, um den Behälter (300) so zu führen, dass er auf die Abtastplattform (103) herabsinkt;
**dadurch gekennzeichnet, dass**
die Führungsstruktur eine Vielzahl von Führungszylindern (104) umfasst, wobei die Führungszylinder (104) entlang der Kanten der Abtaststation (106) auf der Abtastplattform (103) angeordnet sind und die Oberseiten der Führungszylinder (104) kegelförmig sind;
wobei die Führungsstruktur in vertikaler Richtung bezogen auf die Abtastplattform (103) beweglich ist.

7. Verfahren nach Anspruch 6, ferner umfassend:
nachdem die Abtastprüfung abgeschlossen ist, Heben und Transportieren des Behälters (300) von der Abtastplattform (103) zu einer Behälterbewegungsgerät durch die erste Hebekomponente (101) oder eine zweite Hebekomponente (102) des Kaikrans (100).

8. Behälterabtastverfahren nach Anspruch 6, ferner umfassend:
Heben und Transportieren des Behälters (300) von der Zwischenlagerungsstation (107) zu einer Behälterbewegungsgerät durch die erste Hebekomponente (101) oder eine zweite Hebekomponente (102) des Kaikrans (100).

## Revendications

1. Système d'examen par balayage de conteneur, comprenant :
une grue de quai (100), comprenant :
une plateforme d'examen par balayage (103) ; et
un premier composant de levage (101), pour le levage d'un conteneur (300) et le transport du conteneur (300) jusqu'à la plateforme d'examen par balayage (103) ; et
un dispositif d'examen par balayage (200), disposé de manière mobile sur la plateforme d'examen par balayage (103) et configuré pour se déplacer par rapport au conteneur (300) pour réaliser une inspection par balayage sur le conteneur (300) ;
dans lequel la plateforme d'examen par balayage (103) est munie d'un poste d'examen par balayage (106), le poste d'examen par balayage (106) étant configuré pour recevoir le conteneur (300) levé et transporté par le premier composant de levage (101), et le dispositif d'examen par balayage (200) étant configuré pour réaliser une inspection par balayage sur le conteneur (300) sur le poste d'examen par balayage (106) ;
la plateforme d'examen par balayage (103) est en outre munie d'un poste de stockage temporaire (107), le poste de stockage temporaire (107) étant configuré pour stocker temporairement le conteneur (300) sur lequel une inspection par balayage est achevée ;
dans lequel le système d'examen par balayage de conteneur comprend en outre un dispositif de transfert (105), le dispositif de transfert (105) étant disposé sur la plateforme d'examen par balayage (103) et configuré pour transférer le conteneur (300) sur le poste d'examen par balayage (106) vers le poste de stockage temporaire (107) ;
la plateforme d'examen par balayage (103) est munie d'une structure de guidage, qui est configurée pour guider le conteneur (300) afin qu'il descende jusqu'à la plateforme d'examen par balayage (103) ;
**caractérisé en ce que** la structure de guidage comprend une pluralité de cylindres de guidage (104), les cylindres de guidage (104) étant agencés le long de bords du poste d'examen par balayage (106) sur la plateforme d'examen par balayage (103), et les dessus des cylindres de guidage (104) étant en forme de cône ;
la structure de guidage est mobile dans une direction verticale par rapport à la plateforme d'examen par balayage (103).

2. Système d'examen par balayage de conteneur selon la revendication 1, dans lequel le poste de stockage temporaire (107) est disposé sur un côté du poste d'examen par balayage (106) le long d'une première direction qui est une direction de longueur du conteneur (300) ; ou le poste de stockage temporaire (107) est disposé sur un côté du poste d'examen par balayage (106) le long d'une seconde direction qui est une direction de largeur du conteneur (300).

3. Système d'examen par balayage de conteneur selon la revendication 1, dans lequel le premier composant de levage (101) est configuré pour lever le conteneur (300) sur lequel une inspection par balayage est achevée sur la plateforme d'examen par balayage (103) et transporter le conteneur (300) jusqu'à un équipement de déplacement de conteneur ; ou
la grue de quai (100) comprend un second composant de levage (102), et le second composant de levage (102) est configuré pour lever le conteneur (300) sur lequel une inspection par balayage est achevée sur la plateforme d'examen par balayage (103) et transporter le conteneur (300) jusqu'à un équipement de déplacement de conteneur.

4. Système d'examen par balayage de conteneur selon la revendication 1, dans lequel le dispositif d'examen par balayage (200) est configuré pour se déplacer par rapport au conteneur (300) dans une direction de longueur du conteneur (300).

5. Installation portuaire, comprenant le système d'examen par balayage de conteneur selon l'une quelconque des revendications 1 à 4.

6. Procédé d'examen par balayage de conteneur, comprenant :
le levage et le transport d'un conteneur (300) jusqu'à une plateforme d'examen par balayage (103) disposée sur une grue de quai (100) par un premier composant de levage (101) de la grue de quai (100) ; et
l'entraînement d'un dispositif d'examen par balayage (200) disposé sur la plateforme d'examen par balayage (103) afin qu'il se déplace par rapport au conteneur (300) de façon à réaliser une inspection par balayage sur le conteneur (300) ;
la plateforme d'examen par balayage (103) est munie d'un poste d'examen par balayage (106) et d'un poste de stockage temporaire (107), et
le levage et le transport d'un conteneur (300) jusqu'à une plateforme d'examen par balayage (103) disposée sur une grue de quai (100) par un premier composant de levage (101) de la grue de quai (100) comprend : le levage et le transport d'un conteneur (300) jusqu'au poste d'examen par balayage (106) de la plateforme d'examen par balayage (103) disposée sur la grue de quai (100) par le premier composant de levage (101) de la grue de quai (100) ;
l'entraînement d'un dispositif d'examen par balayage (200) disposé sur la plateforme d'examen par balayage (103) afin qu'il se déplace par rapport au conteneur (300) de façon à réaliser une inspection par balayage sur le conteneur (300) comprend : l'entraînement d'un dispositif d'examen par balayage (200) disposé sur la plateforme d'examen par balayage (103) afin qu'il se déplace par rapport au conteneur (300) sur le poste d'examen par balayage (106) pour réaliser une inspection par balayage sur le conteneur (300) sur le poste d'examen par balayage (106) ; et
le procédé d'examen par balayage de conteneur comprend en outre :
après que l'inspection par balayage est achevée, le transfert du conteneur (300) du poste d'examen par balayage (106) au poste de stockage temporaire (107) ;
la fourniture d'une structure de guidage dans la plateforme d'examen par balayage (103), qui est configurée pour guider le conteneur (300) afin qu'il descende jusqu'à la plateforme d'examen par balayage (103) ;
**caractérisé en ce que**
la structure de guidage comprend une pluralité de cylindres de guidage (104), les cylindres de guidage (104) étant agencés le long de bords du poste d'examen par balayage (106) sur la plateforme d'examen par balayage (103), et les dessus des cylindres de guidage (104) étant en forme de cône ;
la structure de guidage est mobile dans une direction verticale par rapport à la plateforme d'examen par balayage (103) .

7. Procédé selon la revendication 6, comprenant en outre :
après que l'inspection par balayage est achevée, le levage et le transport du conteneur (300) de la plateforme d'examen par balayage (103) à un équipement de déplacement de conteneur par le premier composant de levage (101) ou un second composant de levage (102) de la grue de quai (100) .

8. Procédé d'examen par balayage de conteneur selon la revendication 6, comprenant en outre :
le levage et le transport du conteneur (300) du poste de stockage temporaire (107) à un équipement de déplacement de conteneur par le premier composant de levage (101) ou un second composant de levage (102) de la grue de quai (100) .
